# EUROPEAN PATENT SPECIFICATION

(11) **EP 3 154 103 B1**
(45) Date of publication and mention of the grant of the patent: **27.02.2019**
(21) Application number: 15188771.8
(22) Date of filing: 07.10.2015
(51) Int. Cl.: H01M 2/10, H01M 10/625, H01M 10/647, H01M 10/6556, H01M 10/613, H01M 10/658

(54) **BATTERY MODULE INCLUDING A HOUSING FLOOR WITH INTEGRATED COOLING**
BATTERIEMODUL MIT EINEM GEHÄUSEBODEN MIT INTEGRIERTER KÜHLUNG
MODULE DE BATTERIE COMPRENANT UN PLANCHER DE BOÎTIER À REFROIDISSEMENT INTÉGRÉ

(43) Date of publication of application: 12.04.2017
(73) Proprietor: Samsung SDI Co., Ltd., Yongin-si, Gyeonggi-do 17084 (KR)
(72) Inventor: WÜNSCHE, Ralph, 8010 Graz (AT); KRIEGER, Horst, 8453 St. Johann i. S. (AT); STOJANOVIC, Oliver, 8071 Hausmannstätten (AT); KNIEPEISS, Christian, 8102 Schönegg (AT)
(74) Representative: Gulde & Partner

(56) References cited:
- EP-A1- 2 343 769
- EP-A1- 2 608 311
- WO-A1-2012/156363
- DE-A1-102008 034 873
- DE-A1-102011 052 513
- DE-A1-102014 200 989
- US-A1- 2011 132 580
- US-A1- 2012 231 315
- US-A1- 2015 135 940

## Description

### Field of the Invention

The present invention relates to a battery module comprising a plurality of prismatic secondary battery cells. In particular, a modified housing floor including an integrated cooling is provided. Further, the invention also refers to a vehicle including the battery module.

### Technological Background

A rechargeable battery differs from a primary battery in that it can be repeatedly charged and discharged, while the latter makes only the irreversible conversion of chemical to electrical energy. Low-capacity rechargeable batteries are used as the power supply for small electronic devices, such as cellular phones, notebook computers and camcorders, while high-capacity rechargeable batteries are used as the power supply for driving motors in hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. The case may have a cylindrical or rectangular shape depending on the purpose of use and the usage of the rechargeable battery, and electrolyte solution is injected into the case for charging and discharging of the rechargeable battery through an electrochemical reaction of the positive electrode, the negative electrode, and the electrolyte solution.

Rechargeable batteries may be used as a battery module formed of a plurality of unit batteries coupled in series so as to be used for motor driving of a hybrid vehicle that requires high energy density. That is, the battery module is formed by connecting an electrode terminal of each of the plurality of unit batteries depending on the amount of power required for motor driving, such that a high-power rechargeable battery can be realized.

In order to safely use the battery module, heat generated from the rechargeable battery should be efficiently emitted, discharged and/or dissipated. If the heat emission/discharge/dissipation is not sufficiently performed, a temperature deviation occurs between the respective unit batteries, such that the battery module cannot generate a desired amount of power for motor driving. In addition, when the internal temperature of the battery is increased due to the heat generated from the rechargeable battery, an abnormal reaction occurs therein and thus charging and discharging performance of the rechargeable deteriorates and the life-span of the rechargeable battery is shortened. Thus, a cooling device that can cool the rechargeable battery by effectively emitting/discharging/dissipating heat generated from the battery is required.

A device for cooling a vehicle battery is for example known from US 2011/132580 A1. The device includes a cooling plate having ducts for a fluid to flow through. The batteries are in thermal contact with the cooling plate and heat can be transmitted from the batteries to the fluid. The cooling element which comprises the ducts is embodied as at least one extruded profile.

US 2011/132580 A1 discloses a device for cooling a vehicle battery comprising a plurality of electrical storage devices and a cooling element having channels for passage of a fluid. The electrical storage devices are in thermal contact with the cooling element such that heat is transmittable to the fluid from the storage elements. The cooling element may be configured as at least one single-piece extruded aluminum profile.

### Summary of Invention

The invention is defined by the subject-matter of the appended claims. One or more of the drawbacks of the prior art could be avoided or at least reduced by means of the present invention. In particular, a battery module is provided comprising:
- a plurality of prismatic secondary battery cells, each battery cell having a bottom surface; and
- a housing for accommodation of the battery cells including a housing floor comprising integral coolant channels for passage of coolant, the integral coolant channels being in thermal contact with the bottom surfaces of the plurality of battery cells.

In other words, the housing of the battery module includes a rigid housing floor, which involves integrated hollows used as coolant channels. The upper surface of the rigid housing floor serves as a cooling member, i.e. the prismatic (or rectangular) secondary battery cells are arranged on top of the housing floor and are thermally connected to the housing floor. The thermal contact may be enforced by an adhesive joint or a thermal pad. The lower surface of the housing floor terminates the integrated hollows and provides improved mechanical stability against mechanical load of the housing floor. Hence, the housing floor includes components of a conventional heat exchange member, namely a cooling plate and cooling channels. These two parts and a conventional support plate form a common (i.e. integral or one-piece) element of the housing, i.e. the inventive housing floor. Hence, the cooling channels are for example not separable from the housing floor. The inventive housing floor provides outstanding robustness without increasing the total weight of the battery module. Furthermore, the manufacturing process is simplified since the number of component parts is reduced.

Preferably, the integrated housing floor is made of extruded aluminum (sheath), which shows sufficient thermal conductivity and mechanical characteristics. Furthermore, aluminum is a low weight material and manufacturing costs are low.

Connection joints configured for connecting the cooling channels with supply lines or return lines, respectively, for the coolant are positioned at an outer surface of the housing floor. In other words, the coolant channels are connected to coolant distributor lines, wherein the connection joints are positioned remotely from the battery cells or other parts which may transport electricity. An additional (or separate) mechanical protection for the connection joints is provided.

Further, all or a number of prismatic secondary battery cells may be bundled in a row and at least two coolant channels may be positioned underneath the row such that each bottom surface of said battery cells is in thermal contact with said at least two coolant channels. At least one of these coolant channels may be connected with a supply line for the coolant and at least one of the coolant channels may be connected with a return line for the coolant. Such an arrangement of the coolant channels ensures sufficient and uniform cooling of each battery cell.

In addition, a supplemental protection against mechanical load may be attached to the outer surface of the housing floor. The supplemental protection may for example be made of metal or a fiber composite material.

Furthermore, a thermal insulation, for example made of aramid fiber, may be provided at an outer surface of the housing floor, preferably between the supplemental protection and the housing floor. The thermal insulation prohibits warming of the coolant from outside of the battery module. In case of aramid fiber the thermal insulation will further improve the mechanical stability against fracture.

According to another aspect of the present invention, a vehicle including a battery module as defined above is provided.

Further aspects of the present invention could be learned from the dependent claims or the following description.

### Brief Description of the Drawings

Features will become apparent to those of ordinary skill in the art by describing in detail exemplary embodiments with reference to the attached drawings in which:
Fig. 1 illustrates a perspective view of a conventional battery module.
Fig. 2 illustrates a partial sectional view of a battery module according to a first embodiment.
Fig. 3 illustrates a partial sectional view of a battery module according to a second embodiment which is according to the present invention as claimed in the appended claims.

### Detailed Description of the Invention

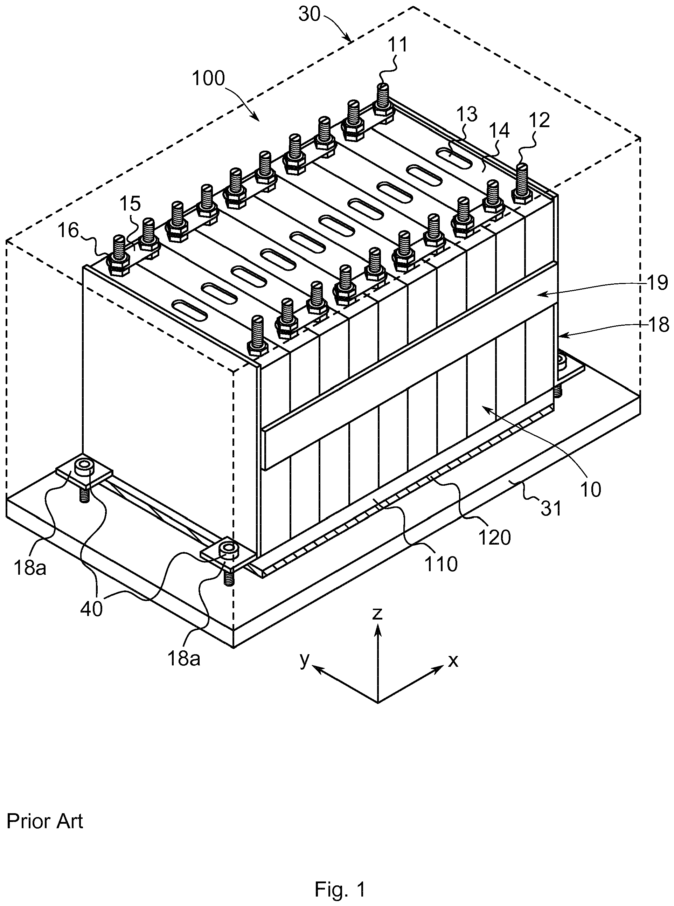

Referring to Fig. 1, an exemplary embodiment of a conventional battery module 100 includes a plurality of battery cells 10 aligned in one direction and a heat exchange member 110 provided adjacent to a bottom surface of the plurality of battery cells 10. A pair of end plates 18 are provided to face wide surfaces of the battery cells 10 at the outside of the battery cells 10, and a connection plate 19 is configured to connect the pair of end plates 18 to each other thereby fixing the plurality of battery cells 10 together. Fastening portions 18a on both sides of the battery module 100 are fastened to a support plate 31 by bolts 40. The support plate 31 is part of a housing 30.

Here, each battery cell 10 is a prismatic (or rectangular) cell, the wide flat surfaces of the cells being stacked together to form the battery module. Further, each battery cell 10 includes a battery case configured for accommodation of an electrode assembly and an electrolyte. The battery case is hermetically sealed by a cap assembly 14. The cap assembly 14 is provided with positive and negative electrode terminals 11 and 12 having different polarities, and a vent 13. The vent 13 is a safety means of the battery cell 10, which acts as a passage through which gas generated in the battery cell 10 is exhausted to the outside of the battery cell 10. The positive and negative electrode terminals 11 and 12 of neighboring battery cells 10 are electrically connected through a bus bar 15, and the bus bar 15 may be fixed by a nut 16 or the like. Hence, the battery module 100 may be used as power source unit by electrically connecting the plurality of battery cells 10 as one bundle.

Generally, the battery cells 10 generate a large amount of heat while being charged/discharged. The generated heat is accumulated in the battery cells 10, thereby accelerating the deterioration of the battery cells 10. Therefore, the battery module 100 further includes a heat exchange member 110, which is provided adjacent to the bottom surface of the battery cells 10 so as to cool down the battery cells 10. In addition, an elastic member 120 made of rubber or other elastic materials may be interposed between the support plate 31 and the heat exchange member 110.

The heat exchange member 110 may include a cooling plate provided to have a size corresponding to that of the bottom surface of the plurality of battery cells 10, e.g., the cooling plate may completely overlap the entire bottom surfaces of all the battery cells 10 in the battery module 100. That is, the cooling plate usually includes a passage through which a coolant can move. The coolant performs a heat exchange with the battery cells 10 while circulating inside the heat exchange member 110, i.e., inside the cooling plate.

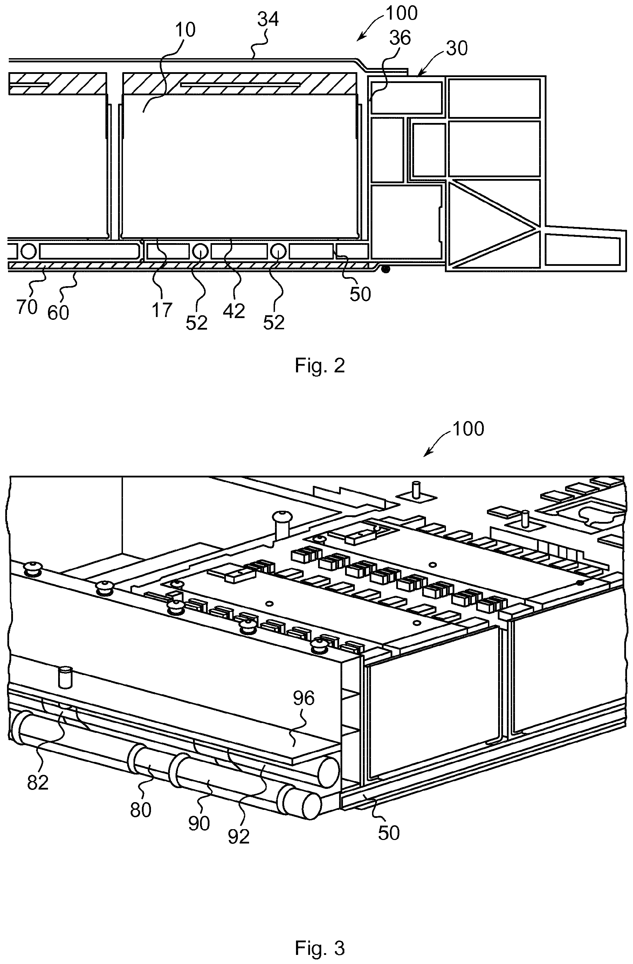

Fig. 2 illustrates a partial sectional view of a battery module 100 according to a first embodiment of the present invention. Similar to the conventional embodiment illustrated in Fig. 1, the battery module 100 includes a plurality of battery cells 10 which are arranged in rows such that their wide flat surfaces face against each other. A bottom surface 17 of each battery cell 10 rests upon a housing floor 50, which itself is part of the housing 30. A thermal contact between the bottom surface 17 and the housing floor 50 is improved by means of a thermal pad 42. The housing 30 further includes a cover 34 and side walls 36. Here, the housing floor 50 consists of extruded aluminum sheath.

Thus, the housing 30 of the battery module 100 includes the rigid housing floor 50, which involves integrated hollows used as coolant channels 52. The upper surface of the rigid housing floor 50 serves as a cooling plate, i.e. the prismatic secondary battery cells 10 are arranged on top of the housing floor 50 and are thermally connected to the upper surface of the housing floor 50. A lower surface of the housing floor 50 terminates the integrated hollows and provides improved mechanical stability against mechanical load and thus acts as a conventional support plate. In summary, the housing floor 50 thus includes components of a conventional heat exchange member, namely the cooling plate and the cooling channels. These two parts of the heat exchange member and a conventional support plate form a common (i.e. integral or one-piece) element of the housing 30, i.e. the inventive housing floor 50.

Hence, in the first embodiment a number of prismatic secondary battery cells 10 are bundled in a row and two coolant channels 52 are positioned underneath the row such that each bottom surface 17 of said battery cells 10 is in thermal contact with said two coolant channels 52. One of the coolant channels 52 may be connected with a supply line for the coolant and the other coolant channel 52 may be connected with a return line for the coolant.

A supplemental protection 60 (or underbody protection) against mechanical load is attached to the outer surface of the housing floor 50. The supplemental protection 60 may be made of metal or a fiber composite material. Further, a thermal insulation 70, for example made of aramid fiber, is provided between the supplemental protection 60 and the housing floor 50.

Fig. 3 illustrates a partial sectional view of a battery module according to a second embodiment which is according to the present invention as claimed in the appended claims. Basically, the battery module 100 of the second embodiment is similar to the battery module 100 of the first embodiment illustrated in Fig. 2 except that connection joints 80, 82 configured for connecting the cooling channels 52 with a supply line 90 or a return line 92, respectively, for the coolant are positioned at an outer surface of the housing floor 50. Here, a separate mechanical protection 96 for the connection joints 80, 82, supply line 90 and return line 92 is provided.

## Claims

1. A battery module (100), comprising:
- a plurality of prismatic secondary battery cells (10), each battery cell (10) having a bottom surface (17); and
- a housing (30) for accommodation of the battery cells (10) including a housing floor (50) comprising integral coolant channels (52) for passage of coolant, the integral coolant channels (52) being in thermal contact with the bottom surfaces (17) of the plurality of battery cells (10),
wherein connection joints (80, 82) configured for connecting the cooling channels (52) with supply lines (90) or return lines (92), respectively, for the coolant are positioned at an outer surface of the housing floor (50),
**characterized in that** a mechanical protection (96) for the connection joints (80, 82) is provided.

2. The battery module of claim 1, wherein the housing floor (50) is made of extruded aluminum.

3. The battery module of claim 1, wherein all or a number of prismatic secondary battery cells (10) are bundled in a row and at least two coolant channels (52) are positioned underneath the row such that each bottom surface (17) of said battery cells (10) is in thermal contact with said at least two coolant channels (52).

4. The battery module of claim 1, wherein a supplemental protection (60) against mechanical load is attached to the outer surface of the housing floor (50).

5. The battery module of claim 4, wherein the supplemental protection (60) is made of metal or a fiber composite material.

6. The battery module of claim 1, wherein a thermal insulation (70) is provided at an outer surface of the housing floor (50).

7. The battery module of claim 6, wherein the thermal insulation (70) is provided between the supplemental protection (60) and the housing floor (50).

8. The battery module of claim 6 or 7, wherein the thermal insulation (70) is made of aramid fiber.

9. A vehicle including a battery module (100) according to one of the preceding claims.

## Patentansprüche

1. Ein Batteriemodul (100), aufweisend;
- eine Vielzahl prismatischer Sekundärbatteriezellen (10), wobei jede Batteriezelle (10) eine Bodenfläche (17) aufweist; und
- ein Gehäuse (30) zum Aufnehmen der Batteriezellen (10), das einen Gehäuseboden (50), der einstückige Kühlkanäle (52) für den Durchfluss von Kühlmittel aufweist, aufweist, wobei die einstückigen Kühlkanäle (52) in thermischem Kontakt mit den Bodenflächen (17) der Vielzahl der Batteriezellen (10) stehen,
wobei Verbindungsstücke (80, 82), die konfiguriert sind, um die Kühlkanäle (52) jeweils mit Zuführleitungen (90) oder Rücklaufleitungen (92) für das Kühlmittel zu verbinden, an einer Außenfläche des Gehäusebodens (50) positioniert sind,
**dadurch gekennzeichnet, dass** ein mechanischer Schutz (96) für die Verbindungsstücke (80, 82) bereitgestellt wird.

2. Das Batteriemodul nach Anspruch 1, wobei der Gehäuseboden (50) aus extrudiertem Aluminium besteht.

3. Das Batteriemodul nach Anspruch 1, wobei alle oder eine Anzahl der prismatischen Sekundärbatteriezellen (10) in einer Reihe gebündelt sind und zumindest zwei Kühlkanäle (52) unterhalb der Reihe derart positioniert sind, dass jede Bodenfläche (17) der besagten Batteriezellen (10) in thermischem Kontakt mit den besagten zumindest zwei Kühlkanälen (52) steht.

4. Das Batteriemodul nach Anspruch 1, wobei ein zusätzlicher Schutz (60) gegen mechanische Belastung an der Außenfläche des Gehäusebodens (50) befestigt ist.

5. Das Batteriemodul nach Anspruch 4, wobei der zusätzliche Schutz (60) aus Metall oder einem Faserverbundmaterial besteht.

6. Das Batteriemodul nach Anspruch 1, wobei eine Wärmeisolierung (70) an einer Außenfläche des Gehäusebodens (50) bereitgestellt wird.

7. Das Batteriemodul nach Anspruch 6, wobei die Wärmeisolierung (70) zwischen dem zusätzlichen Schutz (60) und dem Gehäuseboden (50) bereitgestellt wird.

8. Das Batteriemodul nach Anspruch 6 oder 7, wobei die Wärmeisolierung (70) aus Aramidfaser besteht.

9. Ein Fahrzeug, aufweisend ein Batteriemodul (100) nach einem der vorhergehenden Ansprüche.

## Revendications

1. Module de batterie (100), comprenant :
- une pluralité de cellules de batterie secondaire prismatiques (10), chaque cellule de batterie (10) comportant une surface inférieure (17) ; et
- un boîtier (30) pour la réception des cellules de batterie (10), comprenant un plancher de boîtier (50) comprenant des canaux d'agent de refroidissement intégrés (52) pour le passage d'agent de refroidissement, les canaux d'agent de refroidissement intégrés (52) étant en contact thermique avec les surfaces inférieures (17) de la pluralité de cellules de batterie (10),
dans lequel des raccords de liaison (80, 82) configurés de façon à relier les canaux de refroidissement (52) à des lignes d'alimentation (90) ou à des lignes de retour (92), respectivement, pour l'agent de refroidissement, sont positionnés sur une surface extérieure du plancher de boîtier (50),
**caractérisé en ce qu'**une protection mécanique (96) pour les raccords de liaison (80, 82) est disposée.

2. Module de batterie selon la revendication 1, dans lequel le plancher de boîtier (50) est réalisé en aluminium extrudé.

3. Module de batterie selon la revendication 1, dans lequel toutes les cellules ou un certain nombre de cellules de batterie secondaire prismatiques (10) sont regroupées en une rangée et au moins deux canaux d'agent de refroidissement (52) sont positionnés en dessous de la rangée, de telle sorte que chaque surface inférieure (17) desdites cellules de batterie (10) soit en contact thermique avec lesdits canaux d'agent de refroidissement au nombre d'au moins deux (52) .

4. Module de batterie selon la revendication 1, dans lequel une protection supplémentaire (60) contre une charge mécanique est fixée à la surface extérieure de plancher de boîtier (50).

5. Module de batterie selon la revendication 4, dans lequel la protection supplémentaire (60) est réalisée en métal ou en un matériau composite à fibres.

6. Module de batterie selon la revendication 1, dans lequel une isolation thermique (70) est disposée au niveau d'une surface extérieure du plancher de boîtier (50).

7. Module de batterie selon la revendication 6, dans lequel l'isolation thermique (70) est disposée entre la protection supplémentaire (60) et le plancher de boîtier (50) .

8. Module de batterie selon la revendication 6 ou 7, dans lequel l'isolation thermique (70) est réalisée en fibre d'aramide.

9. Véhicule comprenant un module de batterie (100) selon l'une des revendications précédentes.
